# EUROPEAN PATENT SPECIFICATION

(11) **EP 4 134 984 B1**
(45) Date of publication and mention of the grant of the patent: **03.09.2025**
(21) Application number: 21784256.6
(22) Date of filing: 09.04.2021
(51) Int. Cl.: H01B 3/56, H01B 3/16, H01B 3/44, H01H 33/22, H02B 13/055, H01H 33/56

(54) **DIELECTRIC, DIELECTRIC COMPOSITION AND USE THEREFOR, ELECTRONIC DEVICE, AND SUPPLY METHOD**
DIELEKTRIKUM, DIELEKTRISCHE ZUSAMMENSETZUNG UND VERWENDUNG DAVON, ELEKTRONISCHE VORRICHTUNG UND VERSORGUNGSVERFAHREN
DIÉLECTRIQUE, COMPOSITION DIÉLECTRIQUE ET SON UTILISATION, DISPOSITIF ÉLECTRONIQUE ET PROCÉDÉ D'ALIMENTATION

(30) Priority: 10.04.2020 JP 2020071155
(43) Date of publication of application: 15.02.2023
(73) Proprietor: AGC INC., Chiyoda-ku, Tokyo 1008405 (JP)
(72) Inventor: HAYAMIZU, Hiroki, Tokyo 100-8405 (JP); CHINSOGA, Tamaki, Tokyo 100-8405 (JP); FUKUSHIMA, Masato, Tokyo 100-8405 (JP); NAKAMURA, Masahiko, Tokyo 100-8405 (JP)
(74) Representative: Müller-Boré & Partner Patentanwälte PartG mbB
(86) International application number: PCT/JP2021/015084
(87) International publication number: WO 2021/206174

(56) References cited:
- EP-A1- 2 957 616
- WO-A1-2010/141527
- WO-A1-2018/210938
- JP-A- 2004 256 666
- JP-A- 2010 512 639
- JP-A- 2018 529 783
- US-A1- 2014 196 932
- US-A1- 2014 233 159
- US-A1- 2016 261 095

## Description

### Technical Field

The present invention relates to a dielectric composition and use thereof, an electric device, and a supply method.

### Background Art

In medium-voltage or high-voltage electric devices, a gas filled in a closed vessel of any of these electric devices usually serves to provide electrical insulation and also to achieve electric arc extinction, if necessary. Currently, sulfur hexafluoride (SF₆) is most frequently used as the gas. Sulfur hexafluoride has relatively high dielectric strength, high heat conductivity, and low dielectric loss and is chemically inert and nontoxic to human beings and animals. After an arc breaks down molecules of sulfur hexafluoride, almost all the molecules are quickly reconstituted. Moreover, sulfur hexafluoride is incombustible and is available at low prices even today.

However, SF₆ is known as one of gases with high global warming potentials as it has a global warming potential (GWP) of 23,500 over 100 years on a CO₂-equivalent basis and remains in the atmosphere for 3200 years.

It is known that naturally occurring gases that impose less burden on the environment than sulfur hexafluoride, such as air and nitrogen, are used as alternatives to sulfur hexafluoride. However, naturally occurring gases have a dielectric strength lower than sulfur hexafluoride. For this reason, the volume of a medium-voltage or high-voltage electric device or the gas filling pressure should be significantly increased to use a naturally occurring gas for electrical insulation or electric arc extinction in the medium-voltage or high-voltage electric device. Thus, the use of a naturally occurring gas as an alternative to sulfur hexafluoride is contradictory to the efforts made in the past decades to develop small-size electric devices having smaller external dimensions.

Iodocarbons, such as trifluoroiodomethane, are promising alternatives in terms of electrical characteristics and GWP. However, iodocarbons have a problem that the bond between iodine and carbon atoms in iodocarbons is easily cleavable, because the binding energy between iodine and carbon atoms is much smaller than the binding energy between a halogen atom, other than iodine, and a carbon atom, and thus iodocarbons are easily degradable.

Mixtures of sulfur hexafluoride and another gas such as nitrogen or nitrogen dioxide are being used to restrict the impact of sulfur hexafluoride on the environment. However, these mixtures still have a high GWP due to the high GWP of sulfur hexafluoride. Thus, for example, a mixture of sulfur hexafluoride and nitrogen in a volume ratio of 10/90 has a GWP ranging from about 8000 to 8650, though the dielectric strength of the mixture is 59% of the dielectric strength of sulfur hexafluoride under AC voltage (50 Hz). From this, such a mixture is considered to be unsuitable for use as a gas to reduce the impact on the environment.

As another example, various gaseous dielectric compounds are known as alternatives to sulfur hexafluoride (see, for example, Patent Literature 1). Further, Patent Literature 2 describes azeotropic or azeotrope-like compositions of (Z)-1,1,1,4,4,4-hexafluoro-2-butene.

Patent Literature 3 describes azeotrope-like compositions wherein the two components are haloolefins. Patent Literature 4 describes an electrical apparatus for the generation, transmission, distribution and/or usage of electrical energy, and a method for determining an optimum amount of an adsorber for the adsorption of water and optionally further contaminants in such an electrical apparatus. Patent Literature 5 describes a circuit breaker comprising metal-organic framework material for CO adsorption. Patent Literature 6 describes the use of a mixture comprising a hydrofluoroolefin and a fluoroketone as an electric insulating and/or electric arc extinguishing medium in a medium-voltage electrical device. Patent Literature 7 describes the use of mixtures that comprise a hydrofluoroolefin with three carbon atoms as an insulation and/or arc extinguishing gas in substation electrical devices and particularly in medium-voltage devices.

### Prior Art Literature

### Patent Literature

Patent Literature 1: Japanese National-Phase Publication (JP-A) No. 2010-512639
Patent Literature 2: WO 2010/141527 A1
Patent Literature 3: EP 2 957 616 A1
Patent Literature 4: US 2016/261095 A1
Patent Literature 5: WO 2018/210938 A1
Patent Literature 6: US 2014/233159 A1
Patent Literature 7: US 2014/196932 A1

### SUMMARY OF INVENTION

### Problems to be Solved by the Invention

Among the various gaseous dielectric compounds described in Patent Literature 1, halogenated olefins have a low GWP and low toxicity to human beings and animals and have thus been proposed as one of the promising alternatives to sulfur hexafluoride.

However, contamination of halogenated olefins with water may result in reduced stability and decomposition of the halogenated olefins over time. Moreover, the decomposition of halogenated olefins involves production of decomposition products containing halogen atoms such as fluorine and chlorine, and the decomposition products may cause corrosion of, for example, metallic materials in electric devices. Furthermore, the insulating, breaking, and conducting performances of an insulated apparatus may be affected by the water. Accordingly, control of water as an aspect of product quality control, control of water in the process of filling into an electrical equipment, and control of water in the electrical equipment are important.

The present invention has been made in view of the above circumstances, and an object of the present invention is to provide a dielectric composition with high stability, use of the dielectric composition, an electric device in which the dielectric composition is used, and a method of supplying the dielectric composition.

### Means for Solving the Problem

Specific means to solve the problem are set out in the appended set of claims.

### Advantageous Effect of the Invention

According to the present invention, a dielectric composition with high stability, use of the dielectric composition, an electric device in which the dielectric composition is used, and a method of supplying the dielectric composition, can be provided.

### DESCRIPTION OF EMBODIMENTS

Hereinafter, embodiments for implementing the present invention will be described in detail. However, the present invention is not limited to the following embodiments. In the following embodiments, a component (including a step component and the like) is not indespensable unless explicitly indicated otherwise. The same is also applied to numerical values and ranges.

In the present disclosure, the term "medium voltage" means an AC voltage from 1000 volts to less than 52000 volts or a DC voltage from 1500 volts to less than 75000 volts.

In the present disclosure, the term "high voltage" means an AC voltage of 52000 volts or more or a DC voltage of 75000 volts or more.

When a numerical range is given using the word "to" in the present disclosure, the numbers placed before and after "to" are included in the numerical range as the lower and upper limit values, respectively.

### <Dielectric>

A dielectric of the present disclosure, which is not in accordance with the present invention, contains a halogenated olefin having from 2 to 4 carbon atoms and has water content of 6000 ppm or less in terms of mass. Hereinafter, a halogenated olefin having from 2 to 4 carbon atoms may be referred to as "specific olefin".

Because the water content of the dielectric is 6000 ppm or less in terms of mass, water-induced decomposition of the specific olefin tends to be prevented. This is expected as the reason why the dielectric has high stability.

In the present disclosure, the water content of the dielectric and that of the diluent gas are values obtained by the Karl Fischer method when the dielectric and the diluent gas are liquid at 25°C, and values obtained by the dew-point method when the dielectric and the diluent gas are gaseous at 25°C.

The water content of the dielectric is preferably 1000 ppm or less, more preferably 800 ppm or less, still more preferably 750 ppm or less, and particularly preferably 600 ppm or less, in terms of mass from the viewpoint of stability. The water content of the dielectric may be 500 ppm or less, 420 ppm or less, 370 ppm or less, 300 ppm or less, 150 ppm or less, 120 ppm or less, 100 ppm or less, 50 ppm or less, 25 ppm or less, or 20 ppm or less in terms of mass.

Moreover, the water content of the dielectric is preferably 0.1 ppm or more, and more preferably 1.0 ppm or more, in terms of mass from the viewpoint of production cost.

The specific olefin is not specifically limited as long as the specific olefin contains 2 to 4 carbon atoms and has a carbon-carbon double bond and at least one halogen atom in the molecule.

Preferably, the specific olefin contains a fluorine atom in view of its small environmental impact and excellent insulating- and arc extinguishing-properties.

In view of improving the insulating performance of the specific olefin, the more the number of halogen atoms in the molecule of the specific olefin, the more preferable the specific olefin is, and the halogen atoms are preferably chlorine atoms rather than fluorine atoms.

However, in a case in which the specific olefin contains fluorine and chlorine atoms, the number of chlorine atoms is preferably 2 or less, more preferably 1 or less, in view of setting a boiling point of the specific olefin to a range suitable for dielectric applications.

The specific olefins may be used singly, or in combination of two or more kinds thereof.

The specific olefin may have a GWP of 500 or less, 200 or less, 150 or less, 100 or less, 50 or less, 20 or less, 15 or less, 10 or less, 7 or less, 5 or less, 4 or less, or 3 or less.

GWP values are defined as global warming potential over 100 years on carbon dioxide-equivalent basis according to the method described in "The scientific assessment of ozone depletion, 2002, a report of the World Meteorological Association's Global Ozone Research and Monitoring Project".

Specific examples of the specific olefin preferably include at least one selected from the group consisting of (*E*)-1-chloro-2,3,3,3-tetrafluoropropene, (*Z*)-1-chloro-2,3,3,3-tetrafluoropropene, (*E*)-1,1,1,4,4,4-hexafluorobut-2-ene, (*Z*)-1,1,1,4,4,4-hexafluorobut-2-ene, (*E*)-1-chloro-3,3,3-trifluoropropene, (*Z*)-1-chloro-3,3,3-trifluoropropene, 1,1-difluoroethylene, (*Z*)-1,2-difluoroethylene, (*E*)-1,2-difluoroethylene, trifluoroethylene, 2,3,3,3-tetrafluoro-1-propene, (*E*)-1,3,3,3-tetrafluoropropene, and (*Z*)-1,3,3,3-tetrafluoropropene; more preferably include at least one selected from the group consisting of (*E*)-1-chloro-2,3,3,3-tetrafluoropropene, (*Z*)-1-chloro-2,3,3,3-tetrafluoropropene, (*E*)-1,1,1,4,4,4-hexafluorobut-2-ene, (*Z*)-1,1,1,4,4,4-hexafluorobut-2-ene, (*E*)-1-chloro-3,3,3-trifluoropropene, 2,3,3,3-tetrafluoro-1-propene, (*E*)-1,3,3,3-tetrafluoropropene, and (*Z*)-1,3,3,3-tetrafluoropropene; still more preferably include at least one of (*E*)-1-chloro-2,3,3,3-tetrafluoropropene or (*Z*)-1-chloro-2,3,3,3-tetrafluoropropene; and particularly preferably include (*Z*)-1-chloro-2,3,3,3-tetrafluoropropene. Hereinafter, a mixture of (*E*)-1-chloro-2,3,3,3-tetrafluoropropene and (*Z*)-1-chloro-2,3,3,3-tetrafluoropropene may be referred to as "1-chloro-2,3,3,3-tetrafluoropropene".

(*E*)-1-chloro-2,3,3,3-tetrafluoropropene and (*Z*)-1-chloro-2,3,3,3-tetrafluoropropene are incombustible. Thus, when (*E*)-1-chloro-2,3,3,3-tetrafluoropropene, (*Z*)-1-chloro-2,3,3,3-tetrafluoropropene, or 1-chloro-2,3,3,3-tetrafluoropropene as the specific olefin is used in combination with another specific olefin, the specific olefins as a whole have an increased inhibitory effect on combustion chemistry.

For example, in a case in which (*E*)-1-chloro-2,3,3,3-tetrafluoropropene, (*Z*)-1-chloro-2,3,3,3-tetrafluoropropene, or 1-chloro-2,3,3,3-tetrafluoropropene is used in combination with 2,3,3,3-tetrafluoro-1-propene as the specific olefins, a ratio of a content of (*E*)-1-chloro-2,3,3,3-tetrafluoropropene, (*Z*)-1-chloro-2,3,3,3-tetrafluoropropene, or 1-chloro-2,3,3,3-tetrafluoropropene with respect to a total content of (*E*)-1-chloro-2,3,3,3-tetrafluoropropene, (*Z*)-1-chloro-2,3,3,3-tetrafluoropropene, or 1-chloro-2,3,3,3-tetrafluoropropene and 2,3,3,3-tetrafluoro-1-propene should be 24.8% by volume or more in order to increase the combustion inhibition effect.

Moreover, in a case in which (*E*)-1-chloro-2,3,3,3-tetrafluoropropene, (*Z*)-1-chloro-2,3,3,3-tetrafluoropropene, or 1-chloro-2,3,3,3-tetrafluoropropene is used in combination with (*E*)-1,3,3,3-tetrafluoropropene as the specific olefins, a ratio of a content of (*E*)-1-chloro-2,3,3,3-tetrafluoropropene, (*Z*)-1-chloro-2,3,3,3-tetrafluoropropene, or 1-chloro-2,3,3,3-tetrafluoropropene with respect to a total content of (*E*)-1-chloro-2,3,3,3-tetrafluoropropene, (*Z*)-1-chloro-2,3,3,3-tetrafluoropropene, or 1-chloro-2,3,3,3-tetrafluoropropene and (*E*)-1,3,3,3-tetrafluoropropene should be 16.1% by volume or more in order to increase the combustion inhibition effect.

In a case in which (*E*)-1-chloro-2,3,3,3-tetrafluoropropene and (*Z*)-1-chloro-2,3,3,3-tetrafluoropropene are contained as the specific olefins, a ratio of (*Z*)-1-chloro-2,3,3,3-tetrafluoropropene to a sum of (*E*)-1-chloro-2,3,3,3-tetrafluoropropene and (*Z*)-1-chloro-2,3,3,3-tetrafluoropropene is preferably 50% by mole or more, more preferably 80% by mole or more, still more preferably 90% by mole or more, and particularly preferably 95% by mole or more.

The dielectric of the present disclosure may contain at least one minor component selected from the group consisting of chlorine, hydrogen fluoride, hydrogen chloride, acetic acid, carbonyl fluoride, phosgene, trifluoroacetyl fluoride, acetyl chloride, carbon monoxide, formyl chloride, and chloroform. Hereinafter, these minor components may be referred to as a "first specific minor component".

There is concern that deterioration or embrittlement of a metallic material occurs when the first specific minor component reacts directly with the metallic material or is dissolved in water and brought into contact with the metallic material. Therefore, in a case in which the dielectric of the present disclosure contains the first specific minor component, a content of the first specific minor component is preferably 5000 ppm or less, 3000 ppm or less, 1000 ppm or less, 500 ppm or less, 250 ppm, 100 ppm or less, 50 ppm or less, or 20 ppm or less in terms of mass.

On the other hand, the content of the first specific minor component may be 5 ppm or more or 10 ppm or more, while the content of the first specific minor component is preferably 0 ppm.

A dielectric of the present disclosure may contain: the specific olefin; and at least one minor component selected from the group consisting of: fluorocarbons; chlorofluorocarbons; a fluoroolefin other than the compounds indicated as specific examples of the specific olefin; a chlorofluoroolefin other than the compounds indicated as specific examples of the specific olefin; a chloroolefin other than the compounds indicated as specific examples of the specific olefin; chlorofluoro-alkynes; methanol; ethanol; acetone; hexane; and ethylene. Hereinafter, these minor components may be referred to as a "second specific minor component".

In a case in which the dielectric of the present disclosure contains the specific olefin and the second specific minor component, at least one selected from the group consisting of (*E*)-1-chloro-2,3,3,3-tetrafluoropropene, (*Z*)-1-chloro-2,3,3,3-tetrafluoropropene, 2,3,3,3-tetrafluoro-1-propene, and (*E*)-1,3,3,3-tetrafluoropropene is preferable as the specific olefin, and at least one of (*E*)-1-chloro-2,3,3,3-tetrafluoropropene or (*Z*)-1-chloro-2,3,3,3-tetrafluoropropene is more preferable as the specific olefin.

In the present disclosure, a fluorocarbon is a saturated hydrocarbon compound which contains a fluorine atom but no chlorine atom as a halogen atom in its molecule. The fluorocarbon may or may not contain a hydrogen atom in its molecule.

In the present disclosure, chlorofluorocarbon is a saturated hydrocarbon compound which contains a fluorine atom and a chlorine atom as halogen atoms in its molecule. The chlorofluorocarbon may or may not contain a hydrogen atom in its molecule.

In the present disclosure, a fluoroolefin is an olefinic hydrocarbon compound which contains a fluorine atom but no chlorine atom as a halogen atom in its molecule. The fluoroolefin may or may not contain a hydrogen atom in its molecule.

In the present disclosure, a chlorofluoroolefin is an olefinic hydrocarbon compound which contains a fluorine atom and a chlorine atom as halogen atoms in its molecule. The chlorofluoroolefin may or may not contain a hydrogen atom in its molecule.

In the present disclosure, a chloroolefin is an olefinic hydrocarbon compound which contains a chlorine atom as a halogen atom in its molecule. The chloroolefin may or may not contain a hydrogen atom in its molecule.

In the present disclosure, a chlorofluoro-alkyne is an acetylenic hydrocarbon compound which contains a fluorine atom and a chlorine atom as halogen atoms in its molecule. The chlorofluoro-alkyne may or may not contain a hydrogen atom in its molecule.

The second specific minor component may include a fluorocarbon. Examples of the fluorocarbon include at least one selected from the group consisting of 1,1,1,2-tetrafluoropropane, 1,1,1,3,3-pentafluoropropane, 1,1,1,2,2,3,3-heptafluoropropane, tetrafluoromethane, a fluorinated hydrocarbon represented by C₄H₆F₄, trifluoromethane, and fluoroethane. Examples of the fluorinated hydrocarbon represented by C₄H₆F₄ include 1,1,2,3-tetrafluorobutane.

The second specific minor component may include a chlorofluorocarbon. Examples of the chlorofluorocarbon include at least one selected from the group consisting of 1,3-dichloro-1,1,2,2,3-pentafluoropropane, 2-chloro-1,1,1,2-tetrafluoropropane, 3,3-dichloro-1,1,1,2,2-pentafluoropropane, and chlorotrifluoromethane.

The second specific minor component may include a fluoroolefin other than the compounds indicated as specific examples of the specific olefin. Examples of the fluoroolefin other than the compounds indicated as specific examples of the specific olefin include at least one selected from the group consisting of a fluorinated hydrocarbons represented by C₄H₄F₄ and tetrafluoroethylene. Examples of the fluorinated hydrocarbons represented by C₄H₄F₄ include 1,3,4,4-tetrafluoro-1-butene, 3,4,4,4-tetrafluoro-1-butene, 1,1,2,3-tetrafluoro-1-butene, and 2,4,4,4-tetrafluoro-1-butene.

The second specific minor component may include a chlorofluoroolefin other than the compounds indicated as specific examples of the specific olefin. Examples of the chlorofluoroolefin other than the compounds indicated as specific examples of the specific olefin include at least one selected from the group consisting of 1,1-dichloro-2,3,3,3-tetrafluoropropene, (*Z*)-2-chloro-1,3,3,3-tetrafluoropropene, (*E*)-2-chloro-1,3,3,3-tetrafluoropropene, 2-chloro-1, 1,3,3,3-pentafluoro-1-propene, 2-chloro-3,3,3-trifluoropropene, 1,2-dichloro-1-fluoroethene, and 1,1,2-trichloro-2-fluoroethene.

The second specific minor component may include a chloroolefin other than the compounds indicated as specific examples of the specific olefin. Examples of the chloroolefin other than the compounds indicated as specific examples of the specific olefin include 1,1,2,2-tetrachloroethene.

The second specific minor component may include a chlorofluoro-alkyne. Examples of the chlorofluoro-alkyne include 1-chloro-3,3,3-trifluoro-1-propyne.

The second specific minor component is thought to have a function to prevent decomposition of a specific olefin, which results in stabilization of the specific olefin, though the reason is unclear.

In a case in which the dielectric of the present disclosure contains the specific olefin and the second specific minor component, a content of the second specific minor component is preferably 15000 ppm or less, more preferably 10000 ppm or less, in terms of mass from the viewpoint of further ensuring stability.

On the other hand, the content of the second specific minor component may be 4 ppm or more, 50 ppm or more, or 100 ppm or more, though the content of the second specific minor component is preferably 0 ppm.

The dielectric of the present disclosure may contain the specific olefin, a first specific minor component, and a second specific minor component. In a case in which the dielectric of the present disclosure contains the first specific minor component and the second specific minor component, preferable ranges for the contents of these minor components are as described above for each minor component.

In a case in which the dielectric of the present disclosure contains at least one of (*E*)-1-chloro-2,3,3,3-tetrafluoropropene or (*Z*)-1-chloro-2,3,3,3-tetrafluoropropene, the second specific minor component, and the first specific minor component described above, a desirable range for a content of the first specific minor component in terms of mass is as described above.

The dielectric of the present disclosure may be in a gas or liquid form or in vapor-liquid equilibrium during storage at 25°C.

### <Dielectric Composition>

A first dielectric composition of the present invention contains a halogenated olefin having from 2 to 4 carbon atoms and a diluent gas, in which the diluent gas contains carbon dioxide and a water content of which is 6000 ppm or less in terms of mass.

A second dielectric composition of the present invention contains a halogenated olefin having from 2 to 4 carbon atoms and a diluent gas, in which the diluent gas contains air and a water content of which is 800 ppm or less in terms of mass.

Details of the halogenated olefins having from 2 to 4 carbon atoms contained in the first and second dielectric compositions are the same as those of the compound described in the section about the dielectrics of the present disclosure. The water contents of the halogenated olefins having from 2 to 4 carbon atoms used for the first and second dielectric compositions in terms of mass are not specifically limited.

Hereinafter, the first and second dielectric compositions may be collectively referred to simply as a "dielectric composition".

Because the water content of the first dielectric composition of the present invention is 6000 ppm or less in terms of mass, water-induced decomposition of the specific olefin tends to be reduced. It is thought that the first dielectric composition has high stability accordingly.

Because the water content of the second dielectric composition of the present invention is 800 ppm or less in terms of mass, water-induced decomposition of the specific olefin tends to be reduced. It is thought that the second dielectric composition has high stability accordingly.

The first or second dielectric compositions of the present invention are those obtained by mixing the specific olefin with a diluent gas.

The first or second dielectric composition of the present invention may contain at least one of the first specific minor component or the second specific minor component. In a case in which the first or second dielectric composition of the present invention contains at least one of the first specific minor component or the second specific minor component, the preferable ranges for each of the contents of the minor components are as described above.

The dielectric composition of the present invention is not condensed at relatively low temperatures, such as around -20°C, and thus has a wider working temperature range, as compared to simple dielectrics. Consequently, insulation can be provided even at low temperatures.

Moreover, in a case in which the dielectric composition of the present invention is applied to a gas circuit breaker or the like, fluorine atoms, which have a high electron attachment coefficient, are allowed to flow at high flow rate, which consequently efficiently increase the breaking performance.

The diluent gas is a compound having a boiling point which is lower than that of a dielectric of the present disclosure and, similarly, a dielectric strength which is lower than that of a dielectric of the present disclosure at a reference temperature of, for example, 20°C.

The first dielectric composition contains carbon dioxide as the diluent gas. In the first dielectric composition, the diluent gas preferably contains carbon dioxide at a percentage of 70% by volume or more, more preferably 90% by volume or more, still more preferably 99% by volume or more, and particularly preferably 100% by volume.

In the first dielectric composition, components other than carbon dioxide contained in the diluent gas are not specifically limited, and examples of those components include oxygen and water. In a case in which oxygen exists together with the first dielectric composition, the diluent gas preferably contains oxygen at a percentage of 30% by volume or less, and more preferably 10% by volume or less.

The second dielectric composition contains air as the diluent gas. In the second dielectric composition, the diluent gas preferably contains air at a percentage of 70% by volume or more, more preferably 90% by volume or more, still more preferably 99% by volume or more, and particularly preferably 100% by volume.

In the second dielectric composition, components other than air contained in the diluent gas are not specifically limited, and examples of those components include water.

The diluent gas preferably has a water content of from 2.0 ppm to 6000.0 ppm, more preferably from 2.0 ppm to 2600.0 ppm, still more preferably from 2.0 ppm to 1100.0 ppm, and particularly preferably from 2.0 ppm to 400.0 ppm, in terms of mass.

The water content of the diluent gas is a water content measured before the diluent gas is mixed with a dielectric.

When the dielectric compositions are in the gaseous state, the content of the specific olefin in the dielectric compositions is not specifically limited but is preferably 70% by volume or less, 60% by volume or less, 50% by volume or less, 40% by volume or less, 30% by volume or less, 25% by volume or less, 20% by volume or less, 15% by volume or less, 10% by volume or less, or 5% by volume or less for achieving a condensation temperature required for the dielectric compositions to be only in the gaseous state. When the dielectric compositions are in the gaseous state, the content of the specific olefin in the dielectric compositions is preferably 1% by volume or more, 2% by volume or more, or 3% by volume or more from the viewpoint of the insulating and arc extinguishing performances.

In a case in which a dielectric contains at least one of (*E*)-1-chloro-2,3,3,3-tetrafluoropropene or (*Z*)-1-chloro-2,3,3,3-tetrafluoropropene as the specific olefin, the total content of (*E*)-1-chloro-2,3,3,3-tetrafluoropropene and (*Z*)-1-chloro-2,3,3,3-tetrafluoropropene in the dielectric composition when the dielectric composition is in the gaseous state is preferably 70% by volume or less, 60% by volume or less, 50% by volume or less, 40% by volume or less, 30% by volume or less, 25% by volume or less, 20% by volume or less, 15% by volume or less, 10% by volume or less, or 5% by volume or less for achieving a condensation temperature required for the dielectric composition to be only in the gaseous state. When the dielectric composition is in the gaseous state, the total of (*E*)-1-chloro-2,3,3,3-tetrafluoropropene and (*Z*)-1-chloro-2,3,3,3-tetrafluoropropene in the dielectric composition is preferably 1% by volume or more, 2% by volume or more, or 3% by volume or more from the viewpoint of the insulating and arc extinguishing performances.

The condensation temperature of the dielectric composition is preferably 0°C or lower, more preferably from -70°C to 0°C, still more preferably from -70°C to -10°C, particularly preferably from -70°C to -20°C, and quite preferably from -70°C to -30°C, for maintaining the dielectric composition only in the gaseous state. The condensation temperature of the dielectric composition may be -70°C or higher from the viewpoint of economic efficiency.

Preferably, the first dielectric composition has a water content of 5000 ppm or less, 4000 ppm or less, 3000 ppm or less, 2500 ppm or less, 1000 ppm or less, 800 ppm or less, 500 ppm or less, 420 ppm or less, 370 ppm or less, 300 ppm or less, 150 ppm or less, 120 ppm or less, 100 ppm or less, 50 ppm or less, 25 ppm or less, or 20 ppm or less in terms of mass from the viewpoint of stability. Preferably, the first dielectric composition has a water content of 3 ppm or more, 5 ppm or more, 7 ppm or more, 10 ppm or more, or 15 ppm or more in terms of mass from the viewpoint of economic efficiency.

Preferably, the second dielectric composition has a water content of 500 ppm or less, 420 ppm or less, 370 ppm or less, 300 ppm or less, 150 ppm or less, 120 ppm or less, 100 ppm or less, 50 ppm or less, 25 ppm or less, or 20 ppm or less in terms of mass from the viewpoint of stability. Preferably, the second dielectric composition has a water content of 3 ppm or more, 5 ppm or more, 7 ppm or more, 10 ppm or more, or 15 ppm or more in terms of mass from the viewpoint of economic efficiency.

The water contents of the dielectric compositions are values measured by the dew-point method. For example, it can be measured by the method described in International Electrotechnical Commission (IEC) 60376: 2005.

The dielectric compositions of the present invention are used as at least one of electrical insulating media or electric arc extinguishing media. These are particularly suitable for electrical insulating media and electric arc extinguishing media for medium-voltage or high-voltage electric devices.

The dielectric compositions of the present invention may be in a gas or liquid form or in vapor-liquid equilibrium at 25°C. The dielectric compositions are preferable to be in a gas form before being supplied to an electrical equipment and while being present in the electrical equipment.

A working temperature for the dielectric composition of the present invention is preferably higher than the condensation temperatures of the dielectric composition to prevent the dielectric composition in the gaseous state from being condensed. The temperature is preferably -30°C or higher, -25°C or higher, -20°C or higher, -15°C or higher, -10°C or higher, -5°C or higher, 0°C or higher, 5°C or higher, or 10°C or higher from the viewpoint of climate and working environment. Moreover, the temperature is preferably 50°C or lower, 40°C or lower, 30°C or lower, 25°C or lower, or 20°C or lower from the viewpoint of the maximum working pressure of an equipment.

The "working temperature" is the temperature of the gas in a closed vessel containing the dielectric composition, and the temperature can vary over time, particularly depending on climate or environmental conditions.

The dielectric compositions of the present invention are desired to be not condensed over a planned working temperature range. The use of a diluent gas can prevent a dielectric of the present disclosure from evaporating until it reaches the saturated vapor pressure over the planned working temperature range.

The working pressure for the dielectric composition of the present invention can be, as a gauge pressure, from 0.1 MPa to 0.15 MPa, from 0.15 MPa to 0.3 MPa, from 0.3 MPa to 0.5 MPa, from 0.5 MPa to 0.7 MPa, from 0.7 MPa to 0.9 MPa, from 0.9 MPa to 1 MPa, or from 1 MPa to 1.5 MPa for preventing the dielectric composition from being condensed in both medium-voltage and high-voltage electric devices.

### <Electric device>

An electric device of the present invention includes an electric component and a closed vessel housing the dielectric composition of the present invention.

Specific examples of the electric device include circuit breakers, current breakers, gas-insulated transmission lines, gas-insulated transformers, gas-insulated substations, gas-insulated switches, gas-insulated breakers, and gas-insulated load-break switches.

The electric device is advantageously used in combination with a heating device to allow the dielectric composition to have sufficient dielectric, thermal, and breaking properties for the electric device over a specified or desired temperature range. The heating device is used depending on temperature, pressure, or density of the dielectric composition.

For example, it is ideal that a heating element located at the bottom of the electric device, a position toward which liquids formed by condensation descend through various parts in the device under an action of gravity and converge, can be used as the heating device.

Thus, the gas pressure is ensured to be higher than a test pressure, which is a gas pressure inside the electric device tested according to specifications for evaluation purposes.

For the same reasons, it is advantageous to insulate a wall of the electric device from heat, insulate the electric device or a building which houses the electric device from heat if necessary and, furthermore, heat the electric device or the building which houses the electric device if necessary.

### <Supply Method>

A supply method of the present invention is a method of supplying the dielectric composition of the present invention to the electric device of the present invention. In the supply method of the present invention, the dielectric composition should be supplied to the closed vessel equipped with the electric device. When the dielectric composition of the present invention is supplied, the dielectric composition may be in the form of either a liquid or a gas, or both, or be in the critical state.

In a case in which the dielectric composition is supplied into the closed vessel, the closed vessel may be filled with the dielectric composition by filling the dielectric composition as its entirety or by filling the dielectric or the specific olefin and the diluent gas respectively.

### EXAMPLES

The present invention will be described in detail by way of experimental examples below. However, the present invention is not limited to the experimental examples below.

### (Evaluation of Dielectric (1))

As dielectrics, 1-chloro-2,3,3,3-tetrafluoropropene (purity: 99.75%, the ratio of *Z*/*E* isomers: 99.4/0.6), 2,3,3,3-tetrafluoro-1-propene (purity: 99.91%), and (*E*)-1,3,3,3-tetrafluoropropene (purity: 99.97%) were used.

An inner tube made of Pyrex (registered trademark) glass, which was weighed in advance, was inserted into a pressure resistant vessel made of SUS316, which had an inner volume of 200 cc (mL), a maximum working temperature of 300°C, and a maximum working pressure of 20 MPa in gauge pressure. An amount of water indicated in Table 1 (in terms of mass) was added in advance to the inner tube. A piece of cold rolled steel plate and a piece of steel strip SPCC, a piece of copper, and a piece of aluminum were prepared as metal pieces, and the metal pieces were hung together from the top of the inner tube. Each piece of metal had a size of 25 mm × 30 mm × 2 mm. After the pressure resistant vessel was sealed, the vessel was cooled to solidify the water and degassed under vacuum. Next, the pressure resistant vessel was filled with 50 g of one of the dielectrics, placed in an incubator, and incubated at 150°C for 120 hours. After 120 hours, the pressure resistant vessel was taken from the incubator for evaluation as described below.

### (Measurement of Acid Content)

After the test as described above, the pressure resistant vessel was left to stand until the temperature drops to room temperature (25°C; the same applies hereinafter). The pressure resistant vessel at room temperature was connected to a set of four absorption bulbs, which were connected in series by tubes and each contained 100 mL of pure water, and the dielectric in the pressure resistant vessel was introduced into the water contained in the absorption bulbs for acid extraction by gradually opening a valve of the pressure resistant vessel. After the acid extraction, the water in the first and second absorption bulbs from the upstream side were mixed, and one drop of BTB (bromothymol blue) was added as an indicator to the mixture. The resulting mixture was analyzed by titration using 1/100 N NaOH as an alkaline standard solution. The water in the third and fourth absorption bulbs from the upstream side were mixed, and the mixture was similarly analyzed by titration to establish a blank measurement. From the values of the sample measurement and the blank measurement, the acid concentration in terms of mass was calculated as a HCl concentration.

Subsequently, the metal pieces were taken from the vessel, and the appearance of the metal pieces was visually observed to evaluate the change in appearance based on the following criteria. The evaluation results are shown in Table 1. In Table 1, Examples 1-1 to 1-9, 1-11 to 1-13, and 1-15 to 1-17 are reference examples not in accordance with the present invention, and Examples 1-10, 1-14, and 1-18 are comparative examples.

### (Evaluation Criteria of Acid Content)

A: less than 0.5 ppm (detection limit)
B: 0.5 ppm or more but less than 1.0 ppm
C: 1.0 ppm or more but less than 10.0 ppm
D: 10.0 ppm or more

### (Evaluation Criteria for Visual Inspection)

A: no change on the surface of all the metal pieces
B: slight color change on the surface of some of the metal pieces
C: obvious color change on the surface of some of the metal pieces
D: obvious color change on the surface of all the metal pieces

**Table 1**

| Experimental Examples | Dielectric | Water content (ppm) | Acid content (HCl equivalent) | Appearance of metal piece |
|---|---|---|---|---|
| Example 1-1 | 1-chloro-2,3,3,3-tetrafluoropropene | 15 | A | A |
| Example 1-2 | 1-chloro-2,3,3,3-tetrafluoropropene | 25 | A | A |
| Example 1-3 | 1-chloro-2,3,3,3-tetrafluoropropene | 50 | A | A |
| Example 1-4 | 1-chloro-2,3,3,3-tetrafluoropropene | 95 | A | A |
| Example 1-5 | 1-chloro-2,3,3,3-tetrafluoropropene | 250 | A | A |
| Example 1-6 | 1-chloro-2,3,3,3-tetrafluoropropene | 500 | A | A |
| Example 1-7 | 1-chloro-2,3,3,3-tetrafluoropropene | 750 | B | B |
| Example 1-8 | 1-chloro-2,3,3,3-tetrafluoropropene | 1000 | C | C |
| Example 1-9 | 1-chloro-2,3,3,3-tetrafluoropropene | 5000 | C | C |
| Example 1-10 | 1-chloro-2,3,3,3-tetrafluoropropene | 10000 | D | D |
| Example 1-11 | 2,3,3,3-tetrafluoro-1-propene | 500 | A | A |
| Example 1-12 | 2,3,3,3-tetrafluoro-1-propene | 750 | B | B |
| Example 1-13 | 2,3,3,3-tetrafluoro-1-propene | 5000 | C | C |
| Example 1-14 | 2,3,3,3-tetrafluoro-1-propene | 10000 | D | D |
| Example 1-15 | (*E*)-1,3,3,3-tetrafluoropropene | 500 | A | A |
| Example 1-16 | (*E*)-1,3,3,3-tetrafluoropropene | 750 | B | B |
| Example 1-17 | (*E*)-1,3,3,3-tetrafluoropropene | 5000 | C | C |
| Example 1-18 | (*E*)-1,3,3,3-tetrafluoropropene | 10000 | D | D |

As shown in Table 1, the water content was observed to have no effect on the acid content and on the results of the observation of the appearance of the metal pieces in the examples having the water content of up to 500 ppm. The effects of the water content became obvious gradually as the water content increased to a range from 750 ppm to 5000 ppm. The effects of the water content were very clearly observed at 10000 ppm. This is understood to be a result of the coexistence of a dielectric and water, which leads to hydrolysis of the dielectric and consequent generation of an acid and finally to corrosion of the metal pieces by the acid.

Moreover, similar results to those in the above experimental examples can be obtained even if other specific olefins than the dielectrics listed in Table 1 are used.

### (Evaluation of Dielectric (2) and Evaluation of Dielectric Composition)

The dielectrics used in Examples 1-1 to 1-18 were herein used as dielectrics.

As a diluent gas, air or carbon dioxide was used.

An inner tube made of Pyrex (registered trademark) glass, which was weighed in advance, was inserted into a pressure resistant vessel made of SUS316, which had an inner volume of 200 cc (mL), a maximum working temperature of 300°C, and a maximum working pressure of 20 MPa in gauge pressure. An amount of water indicated in Tables 2 to 9 (in terms of mass) was added in advance to the inner tube. A piece of cold rolled steel plate and a piece of steel strip SPCC, a piece of copper, and a piece of aluminum were prepared as metal pieces, and the metal pieces were hung together from the top of the inner tube. Each piece of metal had a size of 25 mm × 30 mm × 2 mm. After the pressure resistant vessel was sealed, the vessel was cooled to solidify the water and degassed under vacuum. Next, the pressure resistant vessel was placed in an incubator and incubated at 25°C for 3 hours. After 3 hours, the pressure resistant vessel was filled with two of the dielectrics or with one of the dielectrics and either of the diluent gases at partial pressures according to the compositions listed in Tables 2 to 9, such that the total pressure in the pressure resistant vessel was up to 0.45 MPa in gauge pressure. Subsequently, the pressure resistant vessel was maintained in an incubator at 150°C for 120 hours. After 120 hours, the pressure resistant vessel was taken from the incubator for evaluation as described below.

### (Observation of Appearance of Metal Piece)

After the test as described above, the pressure resistant vessel was left to stand until the temperature drops to room temperature. The metal pieces were taken from the pressure resistant vessel at room temperature, and the appearance of the metal pieces was visually observed to evaluate the change in appearance based on the above-described evaluation criteria for visual inspection. The evaluation results are shown in Tables 2 to 9.

In Table 2, Examples 2-1, 2-3, 2-5, and 2-7 are reference examples not in accordance with the present invention, and Examples 2-2, 2-4, 2-6, and 2-8 are comparative examples.

In Table 3, Examples 3-1 to 3-12 are examples of the present invention, and Example 3-13 is a comparative example.

In Table 4, Examples 4-1 to 4-3, 4-5 to 4-7, and 4-9 to 4-11 are examples of the present invention, and Examples 4-4, 4-8, and 4-12 are comparative examples.

In Table 5, Examples 5-1 to 5-12 are examples of the present invention, and Example 5-13 is a comparative example.

In Table 6, Examples 6-1 to 6-3, 6-5 to 6-7, and 6-9 to 6-11 are examples of the present invention, and Examples 6-4, 6-8, and 6-12 are comparative examples.

In Table 7, Examples 7-1 to 7-12 are examples of the present invention, and Example 7-13 is a comparative example.

In Table 8, Examples 8-1 to 8-3, 8-5 to 8-7, and 8-9 to 8-11 are examples of the present invention, and Examples 8-4, 8-8, and 8-12 are comparative examples.

In Table 9, Examples 9-1, 9-3, 9-5, and 9-7 are examples of the present invention, and Examples 9-2, 9-4, 9-6, and 9-8 are comparative examples.

**Table 2**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 2-1 | 1-chloro-2,3,3,3-tetrafluoropropene / 2,3,3,3-tetrafluoro-1-propene | none | 5/95 | none | 5000 | C |
| Example 2-2 | 1-chloro-2,3,3,3-tetrafluoropropene / 2,3,3,3-tetrafluoro-1-propene | none | 5/95 | none | 10000 | D |
| Example 2-3 | 1-chloro-2,3,3,3-tetrafluoropropene / 2,3,3,3-tetrafluoro-1-propene | none | 25/75 | none | 5000 | C |
| Example 2-4 | 1-chloro-2,3,3,3-tetrafluoropropene / 2,3,3,3-tetrafluoro-1-propene | none | 25/75 | none | 10000 | D |
| Example 2-5 | 1-chloro-2,3,3,3-tetrafluoropropene / (*E*)-1,3,3,3-tetrafluoropropene | none | 10/90 | none | 5000 | C |
| Example 2-6 | 1-chloro-2,3,3,3-tetrafluoropropene / (*E*)-1,3,3,3-tetrafluoropropene | none | 10/90 | none | 10000 | D |
| Example 2-7 | 1-chloro-2,3,3,3-tetrafluoropropene / (*E*)-1,3,3,3-tetrafluoropropene | none | 17/83 | none | 5000 | C |
| Example 2-8 | 1-chloro-2,3,3,3-tetrafluoropropene / (*E*)-1,3,3,3-tetrafluoropropene | none | 17/83 | none | 10000 | D |

**Table 3**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 3-1 | 1-chloro-2,3,3,3-tetrafluoropropene | Carbon dioxide | 5 | 95 | 500 | A |
| Example 3-2 | 1-chloro-2,3,3,3-tetrafluoropropene | Carbon dioxide | 5 | 95 | 750 | A |
| Example 3-3 | 1-chloro-2,3,3,3-tetrafluoropropene | Carbon dioxide | 5 | 95 | 1000 | A |
| Example 3-4 | 1-chloro-2,3,3,3-tetrafluoropropene | Carbon dioxide | 5 | 95 | 5000 | A |
| Example 3-5 | 1-chloro-2,3,3,3-tetrafluoropropene | Carbon dioxide | 10 | 90 | 500 | A |
| Example 3-6 | 1-chloro-2,3,3,3-tetrafluoropropene | Carbon dioxide | 10 | 90 | 750 | A |
| Example 3-7 | 1-chloro-2,3,3,3-tetrafluoropropene | Carbon dioxide | 10 | 90 | 1000 | A |
| Example 3-8 | 1-chloro-2,3,3,3-tetrafluoropropene | Carbon dioxide | 10 | 90 | 5000 | A |
| Example 3-9 | 1-chloro-2,3,3,3-tetrafluoropropene | Carbon dioxide | 25 | 75 | 500 | A |
| Example 3-10 | 1-chloro-2,3,3,3-tetrafluoropropene | Carbon dioxide | 25 | 75 | 750 | A |
| Example 3-11 | 1-chloro-2,3,3,3-tetrafluoropropene | Carbon dioxide | 25 | 75 | 1000 | A |
| Example 3-12 | 1-chloro-2,3,3,3-tetrafluoropropene | Carbon dioxide | 25 | 75 | 5000 | C |
| Example 3-13 | 1-chloro-2,3,3,3-tetrafluoropropene | Carbon dioxide | 25 | 75 | 10000 | D |

**Table 4**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 4-1 | 1-chloro-2,3,3,3-tetrafluoropropene | Air | 5 | 95 | 260 | A |
| Example 4-2 | 1-chloro-2,3,3,3-tetrafluoropropene | Air | 5 | 95 | 500 | B |
| Example 4-3 | 1-chloro-2,3,3,3-tetrafluoropropene | Air | 5 | 95 | 750 | C |
| Example 4-4 | 1-chloro-2,3,3,3-tetrafluoropropene | Air | 5 | 95 | 1000 | D |
| Example 4-5 | 1-chloro-2,3,3,3-tetrafluoropropene | Air | 10 | 90 | 260 | A |
| Example 4-6 | 1-chloro-2,3,3,3-tetrafluoropropene | Air | 10 | 90 | 500 | B |
| Example 4-7 | 1-chloro-2,3,3,3-tetrafluoropropene | Air | 10 | 90 | 750 | C |
| Example 4-8 | 1-chloro-2,3,3,3-tetrafluoropropene | Air | 10 | 90 | 1000 | D |
| Example 4-9 | 1-chloro-2,3,3,3-tetrafluoropropene | Air | 25 | 75 | 260 | A |
| Example 4-10 | 1-chloro-2,3,3,3-tetrafluoropropene | Air | 25 | 75 | 500 | B |
| Example 4-11 | 1-chloro-2,3,3,3-tetrafluoropropene | Air | 25 | 75 | 750 | C |
| Example 4-12 | 1-chloro-2,3,3,3-tetrafluoropropene | Air | 25 | 75 | 1000 | D |

**Table 5**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 5-1 | 2,3,3,3-tetrafluoro-1-propene | Carbon dioxide | 5 | 95 | 500 | A |
| Example 5-2 | 2,3,3,3-tetrafluoro-1-propene | Carbon dioxide | 5 | 95 | 750 | A |
| Example 5-3 | 2,3,3,3-tetrafluoro-1-propene | Carbon dioxide | 5 | 95 | 1000 | A |
| Example 5-4 | 2,3,3,3-tetrafluoro-1-propene | Carbon dioxide | 5 | 95 | 5000 | A |
| Example 5-5 | 2,3,3,3-tetrafluoro-1-propene | Carbon dioxide | 10 | 90 | 500 | A |
| Example 5-6 | 2,3,3,3-tetrafluoro-1-propene | Carbon dioxide | 10 | 90 | 750 | A |
| Example 5-7 | 2,3,3,3-tetrafluoro-1-propene | Carbon dioxide | 10 | 90 | 1000 | A |
| Example 5-8 | 2,3,3,3-tetrafluoro-1-propene | Carbon dioxide | 10 | 90 | 5000 | A |
| Example 5-9 | 2,3,3,3-tetrafluoro-1-propene | Carbon dioxide | 25 | 75 | 500 | A |
| Example 5-10 | 2,3,3,3-tetrafluoro-1-propene | Carbon dioxide | 25 | 75 | 750 | A |
| Example 5-11 | 2,3,3,3-tetrafluoro-1-propene | Carbon dioxide | 25 | 75 | 1000 | A |
| Example 5-12 | 2,3,3,3-tetrafluoro-1-propene | Carbon dioxide | 25 | 75 | 5000 | C |
| Example 5-13 | 2,3,3,3-tetrafluoro-1-propene | Carbon dioxide | 25 | 75 | 10000 | D |

**Table 6**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 6-1 | 2,3,3,3-tetrafluoro-1-propene | Air | 5 | 95 | 260 | A |
| Example 6-2 | 2,3,3,3-tetrafluoro-1-propene | Air | 5 | 95 | 500 | B |
| Example 6-3 | 2,3,3,3-tetrafluoro-1-propene | Air | 5 | 95 | 750 | C |
| Example 6-4 | 2,3,3,3-tetrafluoro-1-propene | Air | 5 | 95 | 1000 | D |
| Example 6-5 | 2,3,3,3-tetrafluoro-1-propene | Air | 10 | 90 | 260 | A |
| Example 6-6 | 2,3,3,3-tetrafluoro-1-propene | Air | 10 | 90 | 500 | B |
| Example 6-7 | 2,3,3,3-tetrafluoro-1-propene | Air | 10 | 90 | 750 | C |
| Example 6-8 | 2,3,3,3-tetrafluoro-1-propene | Air | 10 | 90 | 1000 | D |
| Example 6-9 | 2,3,3,3-tetrafluoro-1-propene | Air | 25 | 75 | 260 | A |
| Example 6-10 | 2,3,3,3-tetrafluoro-1-propene | Air | 25 | 75 | 500 | B |
| Example 6-11 | 2,3,3,3-tetrafluoro-1-propene | Air | 25 | 75 | 750 | C |
| Example 6-12 | 2,3,3,3-tetrafluoro-1-propene | Air | 25 | 75 | 1000 | D |

**Table 7**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 7-1 | (E)-1,3,3,3-tetrafluoropropene | Carbon dioxide | 5 | 95 | 500 | A |
| Example 7-2 | (E)-1,3,3,3-tetrafluoropropene | Carbon dioxide | 5 | 95 | 750 | A |
| Example 7-3 | (E)-1,3,3,3-tetrafluoropropene | Carbon dioxide | 5 | 95 | 1000 | A |
| Example 7-4 | (E)-1,3,3,3-tetrafluoropropene | Carbon dioxide | 5 | 95 | 5000 | A |
| Example 7-5 | (E)-1,3,3,3-tetrafluoropropene | Carbon dioxide | 10 | 90 | 500 | A |
| Example 7-6 | (E)-1,3,3,3-tetrafluoropropene | Carbon dioxide | 10 | 90 | 750 | A |
| Example 7-7 | (E)-1,3,3,3-tetrafluoropropene | Carbon dioxide | 10 | 90 | 1000 | A |
| Example 7-8 | (E)-1,3,3,3-tetrafluoropropene | Carbon dioxide | 10 | 90 | 5000 | A |
| Example 7-9 | (E)-1,3,3,3-tetrafluoropropene | Carbon dioxide | 25 | 75 | 500 | A |
| Example 7-10 | (E)-1,3,3,3-tetrafluoropropene | Carbon dioxide | 25 | 75 | 750 | A |
| Example 7-11 | (E)-1,3,3,3-tetrafluoropropene | Carbon dioxide | 25 | 75 | 1000 | A |
| Example 7-12 | (E)-1 , 3, 3, 3-tetrafluoropropene | Carbon dioxide | 25 | 75 | 5000 | C |
| Example 7-13 | (E)-1,3,3,3-tetrafluoropropene | Carbon dioxide | 25 | 75 | 10000 | D |

**Table 8**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 8-1 | (E)-1,3,3,3-tetrafluoropropene | Air | 5 | 95 | 260 | A |
| Example 8-2 | (E)-1,3,3,3-tetrafluoropropene | Air | 5 | 95 | 500 | B |
| Example 8-3 | (E)-1,3,3,3-tetrafluoropropene | Air | 5 | 95 | 750 | C |
| Example 8-4 | (E)-1,3,3,3-tetrafluoropropene | Air | 5 | 95 | 1000 | D |
| Example 8-5 | (E)-1,3,3,3-tetrafluoropropene | Air | 10 | 90 | 260 | A |
| Example 8-6 | (E)-1,3,3,3-tetrafluoropropene | Air | 10 | 90 | 500 | B |
| Example 8-7 | (E)-1,3,3,3-tetrafluoropropene | Air | 10 | 90 | 750 | C |
| Example 8-8 | (E)-1,3,3,3-tetrafluoropropene | Air | 10 | 90 | 1000 | D |
| Example 8-9 | (E)-1,3,3,3-tetrafluoropropene | Air | 25 | 75 | 260 | A |
| Example 8-10 | (E)-1,3,3,3-tetrafluoropropene | Air | 25 | 75 | 500 | B |
| Example 8-11 | (E)-1,3,3,3-tetrafluoropropene | Air | 25 | 75 | 750 | C |
| Example 8-12 | (E)-1,3,3,3-tetrafluoropropene | Air | 25 | 75 | 1000 | D |

**Table 9**

| Experimental Examples | Dielectric | Diluent gas | Dielectric + Diluent gas | | Water content relative to Dielectric + Diluent gas (ppm) | Appearance of metal piece |
|---|---|---|---|---|---|---|
| | | | Dielectric (% by volume) | Diluent gas (% by volume) | | |
| Example 9-1 | 1-chloro-2,3,3,3-tetrafluoropropene / 2,3,3,3-tetrafluoro-1-propene | Carbon dioxide | 70 [17.5/52.5] | 30 | 5000 | C |
| Example 9-2 | 1-chloro-2,3,3,3-tetrafluoropropene / 2,3,3,3-tetrafluoro-1-propene | Carbon dioxide | 70 [17.5/52.5] | 30 | 10000 | D |
| Example 9-3 | 1-chloro-2,3,3,3-tetrafluoropropene / 2,3,3,3-tetrafluoro-1-propene | Air | 70 [17.5/52.5] | 30 | 750 | C |
| Example 9-4 | 1-chloro-2,3,3,3-tetrafluoropropene / 2,3,3,3-tetrafluoro-1-propene | Air | 70 [17.5/52.5] | 30 | 1000 | D |
| Example 9-5 | 1-chloro-2,3,3,3-tetrafluoropropene / (*E*)-1,3,3,3-tetrafluoropropene | Carbon dioxide | 70 [11.9/58.1] | 30 | 5000 | C |
| Example 9-6 | 1-chloro-2,3,3,3-tetrafluoropropene / (*E*)-1,3,3,3-tetrafluoropropene | Carbon dioxide | 70 [11.9/58.1] | 30 | 10000 | D |
| Example 9-7 | 1-chloro-2,3,3,3-tetrafluoropropene / (*E*)-1,3,3,3-tetrafluoropropene | Air | 70 [11.9/58.1] | 30 | 750 | C |
| Example 9-8 | 1-chloro-2,3,3,3-tetrafluoropropene / (*E*)-1,3,3,3-tetrafluoropropene | Air | 70 [11.9/58.1] | 30 | 1000 | D |

As shown in Table 2, the effects of the water content were very clearly observed when the water content was 10000 ppm.

This is understood to be a result of the coexistence of the dielectric and water in the comparative examples among Examples 2-1 to 2-8, which leads to hydrolysis of the dielectric and consequent generation of an acid that causes excessive corrosion of the metal pieces in the comparative examples where the water content was 10000 ppm.

As shown in Tables 3 to 9, in the cases in which the diluent gas in the dielectric composition was carbon dioxide and the carbon dioxide content was 75% by volume or less, the effects of the water content became obvious when the water content was 5000 ppm, and the effects of the water content were very clearly observed at 10000 ppm. This is understood to be the effect of the mixed carbon dioxide to prevent hydrolysis of the dielectric in each of the examples of the present invention among Examples 3-1 to 3-13, 5-1 to 5-13, and 7-1 to 7-13.

As shown in Tables 3 to 9, in the cases in which the diluent gas in the dielectric composition was air, the effects of the water content became obvious gradually regardless of the air content as the water content increased to a range from 500 ppm to 750 ppm. The effects of the water content were very clearly observed at 1000 ppm. This is understood to be the effect of the mixed air to promote hydrolysis of the dielectric in each of Examples 4-1 to 4-12, 6-1 to 6-12, and 8-1 to 8-12.

Moreover, similar results to those in the above experimental examples can be obtained even if other combinations of specific olefins than the combinations of dielectrics listed in Tables 2 to 9 are used. Furthermore, similar results to those in the above experimental examples can be obtained even if other combinations of the specific olefin and a diluent gas than the combinations of the dielectric and the diluent gas listed in Tables 2 to 9 are used.

## Claims

1. A dielectric composition, comprising: a halogenated olefin having from 2 to 4 carbon atoms; and a diluent gas, the diluent gas comprising carbon dioxide, and a water content of the dielectric composition being 6000 ppm or less in terms of mass.

2. A dielectric composition, comprising: a halogenated olefin having from 2 to 4 carbon atoms; and a diluent gas, the diluent gas comprising air, and a water content of the dielectric composition being 800 ppm or less in terms of mass.

3. The dielectric composition according to claim 1 or 2, wherein a content of the halogenated olefin in a gaseous state is 70% by volume or less.

4. The dielectric composition according to any one of claims 1 to 3, wherein the halogenated olefin comprises at least one selected from the group consisting of (*E*)-1-chloro-2,3,3,3-tetrafluoropropene, (*Z*)-1-chloro-2,3,3,3-tetrafluoropropene, (*E*)-1,1,1,4,4,4-hexafluorobut-2-ene, (*Z*)-1,1,1,4,4,4-hexafluorobut-2-ene, (*E*)-1-chloro-3,3,3-trifluoropropene, (*Z*)-1-chloro-3,3,3-trifluoropropene, 1,1-difluoroethylene, (*Z*)-1,2-difluoroethylene, (*E*)-1,2-difluoroethylene, trifluoroethylene, 2,3,3,3-tetrafluoro-1-propene, (*E*)-1,3,3,3-tetrafluoropropene, and (*Z*)-1,3,3,3-tetrafluoropropene,

5. The dielectric composition according to any one claims 1 to 4, wherein the halogenated olefin comprises at least one of (*E*)-1-chloro-2,3,3,3-tetrafluoropropene or (*Z*)-1-chloro-2,3,3,3-tetrafluoropropene,

6. The dielectric composition according to any one of claims 1 to 4, wherein:
the halogenated olefin comprises at least one of (*E*)-1-chloro-2,3,3,3-tetrafluoropropene or (*Z*)-1-chloro-2,3,3,3-tetrafluoropropene; and
a total content of (*E*)-1-chloro-2,3,3,3-tetrafluoropropene and (*Z*)-1-chloro-2,3,3,3-tetrafluoropropene when the dielectric composition is in a gaseous state is 70% by volume or less.

7. The dielectric composition according to any one of claims 1 to 6, having a condensation temperature of 0°C or lower.

8. The dielectric composition according to any one of claims 1 to 7, wherein a water content of the diluent gas is from 2.0 ppm to 6000.0 ppm in terms of mass.

9. The dielectric composition according to claim 1, wherein
a content of the halogenated olefin in a gaseous state is 25% by volume or less and the water content of the dielectric composition is 1000 ppm or less in terms of mass.

10. The dielectric composition according to claim 2, wherein the water content of the dielectric composition is 500 ppm or less in terms of mass.

11. The dielectric composition according to any one of claims 1 to 10, which is used as at least one of an electrical insulating medium or an electric arc extinguishing medium.

12. An electric device comprising: an electric component; and a closed vessel housing the dielectric composition according to any one of claims 1 to 11.

13. The electric device according to claim 12, which is a circuit breaker, a current breaker, a gas-insulated transmission line, a gas-insulated transformer, a gas-insulated substation, a gas-insulated switch, a gas-insulated breaker, or a gas-insulated load-break switch.

14. A supply method, in which the dielectric composition according to any one of claims 1 to 11 is supplied to an electric device according to claim 12 or 13.

15. Use of a dielectric composition according to any one of claims 1 to 11 as at least one of an electrical insulating medium or an electric arc extinguishing medium.

## Patentansprüche

1. Dielektrische Zusammensetzung, umfassend: ein halogeniertes Olefin mit 2 bis 4 Kohlenstoffatomen; und ein Verdünnungsgas, wobei das Verdünnungsgas Kohlenstoffdioxid umfasst und ein Wassergehalt der dielektrischen Zusammensetzung 6000 ppm oder weniger, bezogen auf die Masse, beträgt.

2. Dielektrische Zusammensetzung, umfassend: ein halogeniertes Olefin mit 2 bis 4 Kohlenstoffatomen; und ein Verdünnungsgas, wobei das Verdünnungsgas Luft umfasst und ein Wassergehalt der dielektrischen Zusammensetzung 800 ppm oder weniger, bezogen auf die Masse, beträgt.

3. Dielektrische Zusammensetzung nach Anspruch 1 oder 2, wobei ein Gehalt des halogenierten Olefins in einem gasförmigem Zustand 70 Volumen-% oder weniger beträgt.

4. Dielektrische Zusammensetzung nach einem der Ansprüche 1 bis 3, wobei das halogenierte Olefin mindestens eines, ausgewählt aus der Gruppe, bestehend aus (*E*)-1-Chlor-2,3,3,3-tetrafluorpropen, (*Z*)-1-Chlor-2,3,3,3-tetrafluorpropen, (*E*)-1,1,1,4,4,4-Hexafluorbut-2-en, (*Z*)-1,1,1,4,4,4-Hexafluorbut-2-en, (*E*)-1-Chlor-3,3,3-trifluorpropen, (*Z*)-1-Chlor-3,3,3-trifluorpropen, 1,1-Difluorethylen, (*Z*)-1,2-Difluorethylen, (*E*)-1,2-Difluorethylen, Trifluorethylen, 2,3,3,3-Tetrafluor-1-propen, (*E*)-1,3,3,3-Tetrafluorpropen und (*Z*)-1,3,3,3-Tetrafluorpropen, umfasst.

5. Dielektrische Zusammensetzung nach einem der Ansprüche 1 bis 4, wobei das halogenierte Olefin mindestens eines von (*E*)-1-Chlor-2,3,3,3-tetrafluorpropen oder (*Z*)-1-Chlor-2,3,3,3-tetrafluorpropen umfasst.

6. Dielektrische Zusammensetzung nach einem der Ansprüche 1 bis 4, wobei:
das halogenierte Olefin mindestens eines aus (*E*)-1-Chlor-2,3,3,3-tetrafluorpropen oder (*Z*)-1-Chlor-2,3,3,3-tetrafluorpropen umfasst; und
ein Gesamtgehalt an (*E*)-1-Chlor-2,3,3,3-tetrafluorpropen und (*Z*)-1-Chlor-2,3,3,3-tetrafluorpropen, wenn sich die dielektrische Zusammensetzung in einem gasförmigen Zustand befindet, 70 Volumen-% oder weniger beträgt.

7. Dielektrische Zusammensetzung nach einem der Ansprüche 1 bis 6, die eine Kondensationstemperatur von 0°C oder weniger aufweist.

8. Dielektrische Zusammensetzung nach einem der Ansprüche 1 bis 7, wobei ein Wassergehalt des Verdünnungsgases von 2,0 ppm bis 6000,0 ppm, bezogen auf die Masse, beträgt.

9. Dielektrische Zusammensetzung nach Anspruch 1, wobei
ein Gehalt des halogenierten Olefins in einem gasförmigem Zustand 25 Volumen-% oder weniger beträgt und der Wassergehalt der dielektrischen Zusammensetzung 1000 ppm oder weniger, bezogen auf die Masse, beträgt.

10. Dielektrische Zusammensetzung nach Anspruch 2, wobei der Wassergehalt der dielektrischen Zusammensetzung 500 ppm oder weniger, bezogen auf die Masse, beträgt.

11. Dielektrische Zusammensetzung nach einem der Ansprüche 1 bis 10, die als mindestens eines aus einem elektrisch isolierenden Medium oder einem Lichtbogenlöschmedium verwendet wird.

12. Elektrische Vorrichtung, umfassend: ein elektrisches Bauteil; und einen geschlossenen Behälter, der die dielektrische Zusammensetzung nach einem der Ansprüche 1 bis 11 umgibt.

13. Elektrische Vorrichtung nach Anspruch 12, die ein Stromkreisunterbrecher, ein Stromunterbrecher, eine gasisolierte Übertragungsleitung, ein gasisolierter Transformator, ein gasisoliertes Umspannwerk, ein gasisolierter Schalter, ein gasisolierter Unterbrecher oder ein gasisolierter Lasttrennschalter ist.

14. Versorgungsverfahren, in welchem die dielektrische Zusammensetzung nach einem der Ansprüche 1 bis 11 einer elektrischen Vorrichtung nach Anspruch 12 oder 13 zugeführt wird.

15. Verwendung einer dielektrischen Zusammensetzung nach einem der Ansprüche 1 bis 11 als mindestens eines aus einem elektrischen Isoliermedium oder einem Lichtbogenlöschmedium.

## Revendications

1. Composition diélectrique, comprenant : une oléfine halogénée ayant de 2 à 4 atomes de carbone ; et un gaz diluant, le gaz diluant comprenant du dioxyde de carbone, et une teneur en eau de la composition diélectrique étant de 6000 ppm ou moins en termes de masse.

2. Composition diélectrique, comprenant : une oléfine halogénée ayant de 2 à 4 atomes de carbone ; et un gaz diluant, le gaz diluant comprenant de l'air, et une teneur en eau de la composition diélectrique étant de 800 ppm ou moins en termes de masse.

3. Composition diélectrique selon la revendication 1 ou 2, dans laquelle une teneur en l'oléfine halogénée dans un état gazeux est de 70 % en volume ou moins.

4. Composition diélectrique selon l'une quelconque des revendications 1 à 3, dans laquelle l'oléfine halogénée comprend au moins un composé sélectionné parmi le groupe constitué du (E)-1-chloro-2,3,3,3-tétrafluoropropène, (Z)-1-chloro-2,3,3,3-tétrafluoropropène, (E)-1,1,1,4,4,4-hexafluorobut-2-ène, (Z)-1,1,1,4,4,4-hexafluorobut-2-ène, (E)-1-chloro-3,3,3-trifluoropropène, (Z)-1-chloro-3,3,3-trifluoropropène, 1,1-difluoroéthylène, (Z)-1,2-difluoroéthylène, (E)-1,2-difluoroéthylène, trifluoroéthylène, 2,3,3,3-tétrafluoro-1-propène, (E)-1,3,3,3-tétrafluoropropène et (Z)-1,3,3,3-tétrafluoropropène.

5. Composition diélectrique selon l'une quelconque des revendications 1 à 4, dans laquelle l'oléfine halogénée comprend au moins un du (E)-1-chloro-2,3,3,3-tétrafluoropropène ou (Z)-1-chloro-2,3,3,3-tétrafluoropropène.

6. Composition diélectrique selon l'une quelconque des revendications 1 à 4, dans laquelle :
l'oléfine halogénée comprend au moins un du (E)-1-chloro-2,3,3,3-tétrafluoropropène ou (Z)-1-chloro-2,3,3,3-tétrafluoropropène ; et
une teneur totale en (E)-1-chloro-2,3,3,3-tétrafluoropropène et (Z)-1-chloro-2,3,3,3-tétrafluoropropène lorsque la composition diélectrique est dans un état gazeux est de 70 % en volume ou moins.

7. Composition diélectrique selon l'une quelconque des revendications 1 à 6, ayant une température de condensation de 0 °C ou inférieure.

8. Composition diélectrique selon l'une quelconque des revendications 1 à 7, dans laquelle une teneur en eau du gaz diluant va de 2,0 ppm à 6000,0 ppm en termes de masse.

9. Composition diélectrique selon la revendication 1, dans laquelle une teneur en l'oléfine halogénée dans un état gazeux est de 25 % en volume ou moins et la teneur en eau de la composition diélectrique est de 1000 ppm ou moins en termes de masse.

10. Composition diélectrique selon la revendication 2, dans laquelle la teneur en eau de la composition diélectrique est de 500 ppm ou moins en termes de masse.

11. Composition diélectrique selon l'une quelconque des revendications 1 à 10, qui est utilisée en tant qu'au moins un d'un milieu isolant électrique ou d'un milieu extincteur d'arc électrique.

12. Dispositif électrique comprenant : un composant électrique ; et un récipient fermé hébergeant la composition diélectrique selon l'une quelconque des revendications 1 à 11.

13. Dispositif électrique selon la revendication 12, qui est un disjoncteur de circuit, un disjoncteur de courant, une ligne de transmission à isolation gazeuse, un transformateur à isolation gazeuse, un poste électrique à isolation gazeuse, un interrupteur à isolation gazeuse, un disjoncteur à isolation gazeuse ou un interrupteur coupe-charge à isolation gazeuse.

14. Procédé d'alimentation, dans lequel la composition diélectrique selon l'une quelconque des revendications 1 à 11 est alimentée à un dispositif électrique selon la revendication 12 ou 13.

15. Utilisation d'une composition diélectrique selon l'une quelconque des revendications 1 à 11 en tant qu'au moins un d'un milieu isolant électrique ou d'un milieu extincteur d'arc électrique.
